# FASCICULE DE BREVET EUROPEEN

(11) **EP 3 046 753 B1**
(45) Date de publication et mention de la délivrance du brevet: **15.05.2019**
(21) Numéro de dépôt: 14784325.4
(22) Date de dépôt: 22.09.2014
(51) Int. Cl.: B29C 65/18, B29C 65/14, B29C 65/20, B29C 65/78, B29D 23/20

(54) **DISPOSITIF DE PRODUCTION D'UN EMBALLAGE AIRLESS**
VORRICHTUNG ZUR HERSTELLUNG EINER LUFTLOSEN VERPACKUNG
DEVICE FOR PRODUCING AN AIRLESS PACKAGING

(30) Priorité: 20.09.2013 FR 1359077
(43) Date de publication de la demande: 27.07.2016
(73) Titulaire: Pumpart System,, 92190 Meudon (FR)
(72) Inventeur: DESCLOZEAUX, Benjamin, F-26120 Upie (FR); DESCLOZEAUX, Christophe, F-26120 Montmeyran (FR)
(74) Mandataire: Delorme, Nicolas
(86) Numéro de dépôt international: PCT/FR2014/052355
(87) Numéro de publication internationale: WO 2015/040342

(56) Documents cités:
- US-A- 5 416 303
- US-A1- 2009 173 043

## Description

La présente invention concerne un dispositif de production d'un emballage de conditionnement de produits visqueux.

De nombreux produits, en particulier, des produits cosmétiques sont conditionnés dans des flacons et sont expulsés du flacon pour leur utilisation.

L'expulsion du produit a pour conséquence l'introduction d'air dans le flacon.

Or, l'introduction d'air a un effet délétère sur le produit puisqu'il en provoque l'oxydation. Il s'ensuit une dégradation rapide du produit qui devient prématurément inutilisable.

Pour pallier ce problème, les laboratoires cosmétiques sont alors contraints d'ajouter à leur composition des agents de conservation.

On connait, par ailleurs, des emballages de produits visqueux - notamment cosmétique - du type « airless ».

Par emballage « airless », on entend un emballage qui permet l'extraction du produit contenu dans l'emballage sans introduction d'air à la place du produit qui a été extrait.

Dans cette problématique technique, le document WO2012/136932 divulgue un emballage « airless » qui possède une enveloppe extérieure élastiquement déformable et une poche intérieure souple dans laquelle un produit pâteux est stocké. La poche est fixée partiellement sur la paroi interne de l'enveloppe en laissant libre une portion de la poche.

L'emballage selon le document fonctionne de façon très remarquable tout en présentant une structure beaucoup plus simple que celle des emballages « airless » connus ; ceux-ci sont généralement basés sur l'emploi de pompes complexes et donc coûteuses.

Cependant, le succès de cet emballage est limité par la difficulté qui existe à en assurer la fabrication de manière industrielle.

En effet, il existe une importante difficulté technologique à solidariser une poche souple à l'intérieur d'une enveloppe et, ce, à une cadence industrielle. Le brevet US 5,416,303 décrit un dispositif de production d'un emballage comprenant une enveloppe élastiquement déformable comprenant un corps ayant une extrémité ouverte et une extrémité dotée d'un col et une poche souple tubulaire comprenant une extrémité ouverte et une extrémité fermée par une ligne de soudage transversale, le dispositif comprenant des moyens de formation de la poche à partir d'un film de matière plastique, des moyens de préhension de la poche, des moyens d'engagement de la poche dans l'enveloppe et des moyens de soudage de la poche dans l'enveloppe configurés pour effectuer une soudure thermique continue à l'intérieur de l'enveloppe.

Il est également important que le mode de solidarisation de la poche dans l'enveloppe permette de contrôler, avec précision, la position de la portion libre par rapport à la portion fixe. Le bon fonctionnement de l'emballage,
et, en particulier, sa capacité à expulser la totalité du produit qui est stocké, dépend de façon importante de la bonne position de la soudure qui assure la fixation de l'enveloppe dans l'enveloppe. Cette dernière doit, en effet, être positionnée de façon précise à l'intérieur de l'emballage lorsque l'emballage présente une forme cylindrique.

Dans ce contexte technique, un but de l'invention est de proposer un dispositif de fabrication d'un emballage comprenant une enveloppe dans laquelle est fixée une poche souple qui autorise une cadence et une répétabilité élevées. La présente invention concerne un dispositif de production d'un emballage défini par la revendication 1.

L'invention fournit ainsi un dispositif permettant de former une poche à partir d'un film avec de faibles dispersions dimensionnelles, de prendre la poche ainsi formée, de l'amener et de la poser dans une enveloppe pour la souder à l'intérieur de cette même enveloppe.

Selon une disposition avantageuse de l'invention, le dispositif comprend un mandrin mobile sur lequel la poche est susceptible de venir s'engager et des pinces mobiles entre une position rapprochée dans laquelle les pinces retiennent la poche sur le mandrin et une position écartée dans laquelle les pinces libèrent la poche du mandrin.

Il est prévu, de plus, que chacune de pinces soit pourvue d'au moins un système de prise par aspiration tel que par exemple une ventouse.

En outre, le mandrin comprend des moyens de rétraction de la poche sur le mandrin.

Par ailleurs, le dispositif peut présenter des mâchoires permettant un pincage et découpe de la poche.

Selon une disposition de l'invention, le dispositif comprend une embase dotée d'une empreinte complémentaire du col de l'enveloppe et une bague de maintien de l'extrémité ouverte de l'enveloppe.

Il est, de plus, prévu que le dispositif comprenne une tête de soudage conçue pour s'engager dans l'enveloppe lorsque celle-ci est placée sur l'embase.

De plus, la tête de soudage comprend une nervure de chauffe conçue pour venir tangenter la poche placée dans l'enveloppe.

En outre, l'embase possède des moyens de mise en rotation permettant à l'enveloppe d'effectuer un tour sur elle-même d'au moins 360°.

Le dispositif comprend de plus les moyens de formation de la poche comprennent un entrefer délimité par un noyau et une bague dans lequel un film est recourbé sur lui-même et une roulette de soudage effectuant une soudure longitudinale.

De plus, le dispositif comprend des éléments de soudage réalisant des soudures transversales selon un pas régulier formant le fond d'une poche.

Selon une forme de réalisation, les moyens de formation de la poche comprennent un entrefer délimité par un noyau et une bague dans lequel un film est recourbé sur lui-même et une roulette de soudage effectuant une soudure longitudinale.

De plus, le dispositif comprend des éléments de soudage réalisant des soudures transversales selon un pas régulier formant le fond d'une poche.

Pour réaliser l'obturation de l'enveloppe, le dispositif comprend un mandrin chauffant destiné à être engagé dans l'extrémité ouverte de l'enveloppe et deux mors destiné à venir écraser l'extrémité de l'enveloppe.

De préférence, le mandrin présente un système de refroidissement à son extrémité formant une barrière thermique avec l'intérieur de l'enveloppe.

Pour sa bonne compréhension, l'invention est décrite en référence aux figures ci-annexées représentant à titre d'exemple non limitatif une forme de réalisation d'un dispositif de fixation d'une poche dans une enveloppe selon celle-ci.
Figure 1 est une vue générale d'un dispositif de production d'un emballage comprenant une enveloppe élastique souple et une poche intérieure ;
Figure 2 montre à une échelle agrandie la formation d'une gaine à partir d'un film plat ;
Figures 3 à 7 montrent le dispositif selon l'invention au cours de la mise en place d'une poche dans une enveloppe ;
Figure 8 et 9 montrent respectivement en perspective et en coupe les moyens de soudage du dispositif selon l'invention d'une poche en matière plastique à l'intérieur d'une enveloppe ;
Figures 10 et 11 montrent respectivement en une vue en perspective les moyens de remplissage et soudage de l'emballage ;
Figures 12 à 14 montrent le dispositif selon l'invention lors de l'obturation de l'extrémité libre de l'enveloppe.

Comme cela va apparaitre dans la description qui va suivre, le dispositif selon l'invention permet de produire à une cadence industrielle un emballage de type airless.

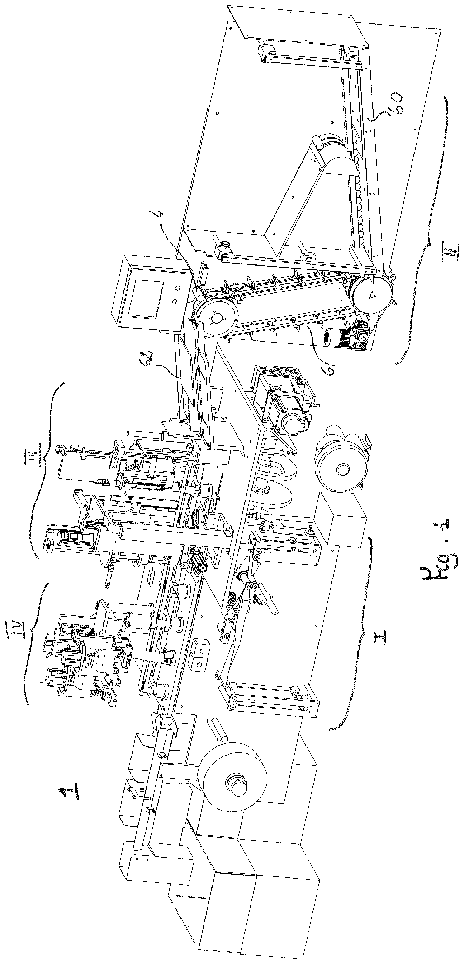

La figure 1 montre un dispositif complet comprenant schématiquement quatre postes à savoir : un poste de formation d'une gaine I, un poste d'amenée d'enveloppes II, un poste de pose et de soudure d'une poche à l'intérieur de l'enveloppe III, un poste de remplissage et de fermeture de l'enveloppe IV.

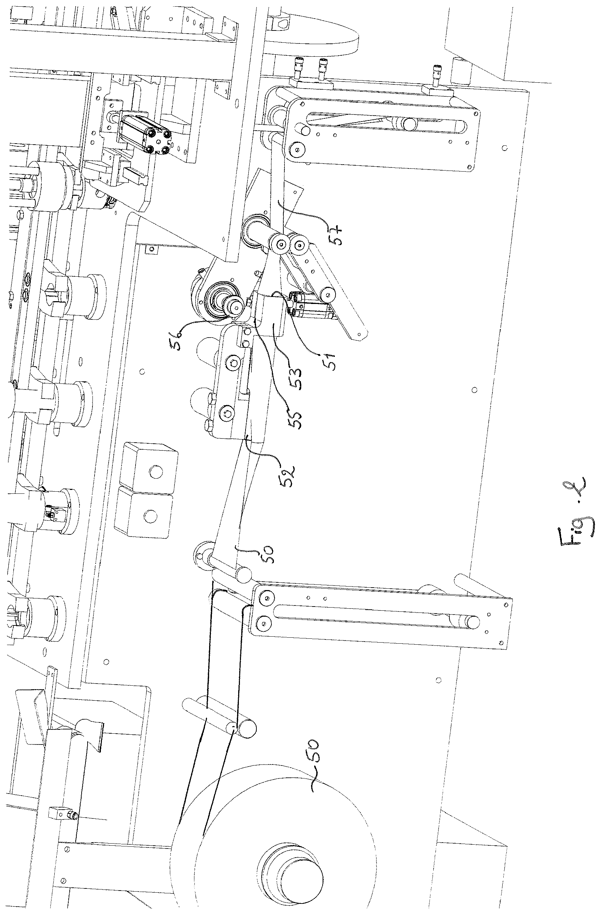

La figure 2 montre la formation d'un élément de l'emballage à savoir une gaine tubulaire continue. Pour cela, le dispositif comprend un ensemble permettant de dérouler un film 50 de matière plastique typiquement d'une épaisseur de 20 à 200 µm. Le film est ainsi amené dans un entrefer 51 délimité par un noyau 52 et une bague 53. Dans l'entrefer 51 qui présente une forme circulaire, le film 50 initialement plan est recourbé sur lui-même sur une bande de recouvrement de ses deux bords longitudinaux du film de l'ordre de 3 mm. A l'aplomb de la bande de recouvrement, le bague 53 est dotée d'une rainure 55 dans laquelle plonge une roulette de soudage 56 qui solidarise les deux bords longitudinaux du film 50.

La gaine 57 ainsi formée est ensuite tractée pour une série de rouleaux et pantographe.

Il est précisé que la formation d'une gaine tubulaire 57 permet de garantir les dimensions de la gaine avec une précision très supérieure à celle d'une gaine obtenue par un procédé classique d'extrusion.

Le dispositif comprend également un poste d'amenée d'enveloppe. On peut préciser que, dans l'exemple illustré, l'enveloppe 4 possède un corps cylindrique 5 ayant une extrémité ouverte 6 et une extrémité dotée d'un col 7 tronconique ; le col 7 tronconique est prolongé par une embouchure 8 pourvue d'un filetage selon des dispositions conventionnelles en matière d'emballage. Le corps cylindrique 5 est, ici, décrit de manière purement illustrative et d'autres formes sont envisageables.

Dans l'exemple illustré, les enveloppes sont amenées par un plan incliné 60 puis un convoyeur 61 transporte les enveloppes une par une jusqu'à un plan incliné 62 qui achemine les enveloppes vers un poste de pose d'un poche à l'intérieur d'une enveloppe.

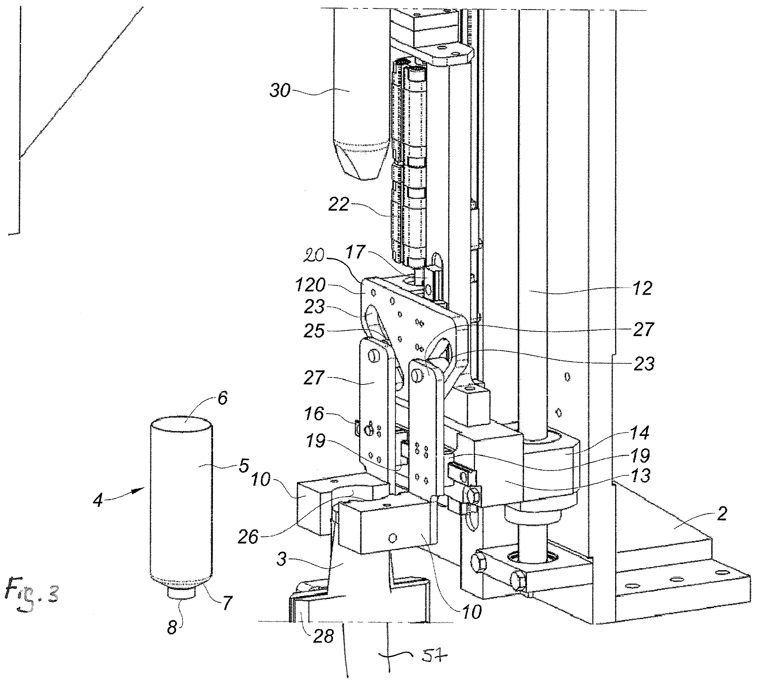

En se reportant à la figure 3, il apparaît que le dispositif selon l'invention possède un bâti 2 sur lequel sont fixés plusieurs organes qui participent à la préhension d'une poche 3, à son amenée vers une enveloppe 4 et à sa fixation à l'intérieur de l'enveloppe 4.

Comme on peut le voir sur la figure 3, le bâti 2 supporte des moyens qui vont gérer la phase d'amenée d'une poche 3 en matière plastique souple dans une enveloppe 4 tubulaire.

Pour sa part, la poche 3 est constituée de la gaine 57 sur laquelle sont pratiquées des soudures transversales 58 selon un pas régulier. En d'autres termes, la poche 3 se présente sous la forme d'un tube qui est ouvert à l'une de ses extrémités et qui est fermé à son autre extrémité par une ligne de soudure transversale.

Le bâti 2 supporte un système de pinces 10 qui va assurer la préhension de la poche 3. Comme on va le voir, les pinces 10 sont animées de mouvements symétriques et antagonistes.

Pour cela, le bâti 2 est doté d'un axe vertical 12 sur lequel coulisse une platine de support 13; la platine de support 13 embarque les deux pinces 10. Sur l'exemple représenté sur les figures, la platine de support 13 est constituée de deux composants formant un T inversé. La platine de support 13 possède de plus un palier 14 permettant son coulissement le long de l'axe vertical 12.

On peut noter que, sur sa face frontale, la platine de support 13 est dotée de deux glissières 16 et 17. Il s'agit d'une glissière basse transversale 16 et d'une glissière haute verticale 17. Chaque pince 10 est dotée d'un coulisseau 19 permettant son glissement sur la glissière basse transversale 16.

La glissière verticale 17 reçoit une plaque de commande 20. La plaque de commande 20 est actionnée par un actionneur 22 (tel qu'un vérin) qui contrôle son déplacement le long de la glissière verticale 17.

On note la présence, dans la plaque de commande 20, de deux lumières 23 orientées à 45° par rapport à la glissière haute verticale 17. Chacune des lumières 23 reçoit un galet 25 qui est lié à une pince 10.

Ainsi, lors de l'activation de l'actionneur 22, la plaque de commande 20 coulisse sur la glissière haute verticale 17 et tracte les deux pinces 10 dans un mouvement horizontal qui les écarte l'une de l'autre.

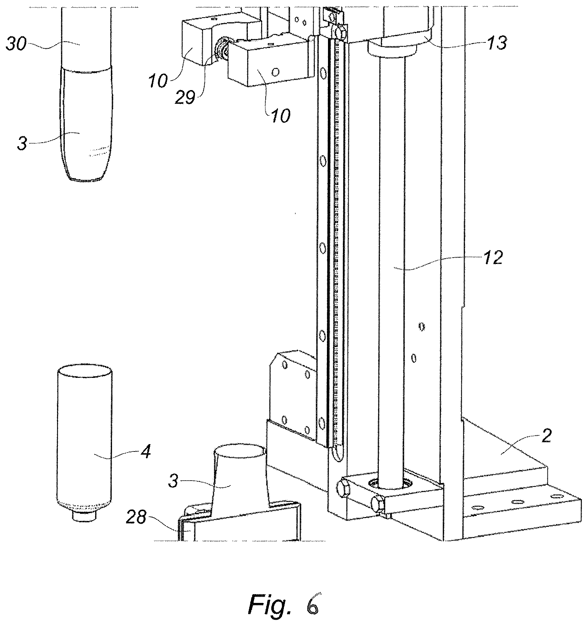

Chaque pince 10 possède un mors de préhension 26 et une patte 27 sur laquelle sont fixés le coulisseau 19 et le galet 25. De plus, chaque pince 10 est équipée d'une ou plusieurs ventouses 29 qui sont logées à l'intérieur de son mors de préhension 26. Une ventouse 29 peut être plus particulièrement vue à la figure 6.

On voit ainsi que le mouvement des pinces 10 est contraint par la plaquette de commande 20 et par la glissière transversale horizontale 16.

Une action de l'actionneur 22 sur la plaquette de commande 20 dans un sens ascendant écarte les pinces 10 l'une de l'autre, tandis qu'une action de l'actionneur 22 sur la plaquette de commande 20 dans un sens descendant ramène les pinces 10 l'une vers l'autre.

Les pinces de préhension 10 sont alignées, avec en partie inférieure, deux plaques 28 qui enserrent la poche 3 et, en en partie supérieure, un mandrin 30. Le mandrin 30 est, pour sa part, mobile selon une direction verticale.

En fonctionnement, une poche 3 se présente pour être insérée et fixée dans une enveloppe 4. Comme on peut le voir sur la figure 3, une poche 3 est maintenue entre les deux plaques 28.

La figure 3 montre les deux pinces 10 en position descendue. Dans cette position, les deux pinces 10 sont disposées de part et d'autre de la poche 3 ; ainsi, les ventouses 29 viennent agripper la poche 3.

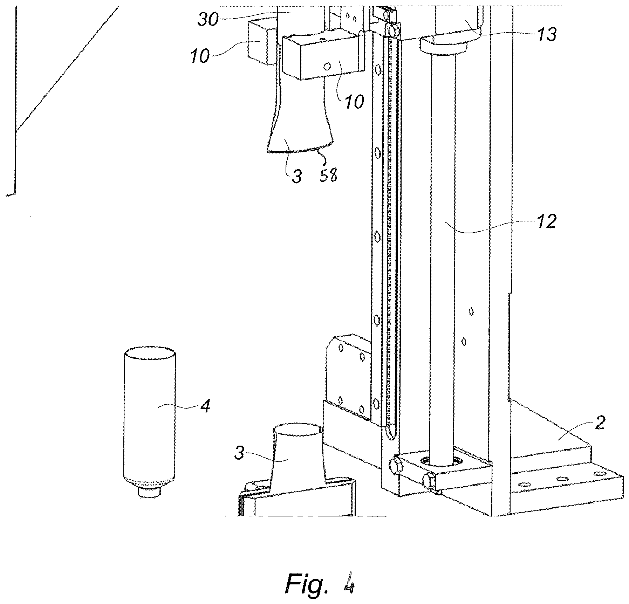

Comme le montre la Figure 4, les pinces de préhension 10 emportent la poche 3 pour l'engager sur le mandrin 30.

La poche 3 se trouve alors chaussée sur le mandrin 30. Pour faciliter l'introduction du mandrin 30 dans la poche 3, il est doté d'une extrémité tronconique.

Le dispositif réalise ainsi une phase importante de l'assemblage de l'emballage puisque la poche 3 est positionnée et tenue - et ce avec une cote parfaitement répétable - sur le mandrin 30 et est prête pour être introduite dans l'enveloppe 4.

La figure 4 montre le mandrin 30 et les pinces retenant la poche 3 en position haute.

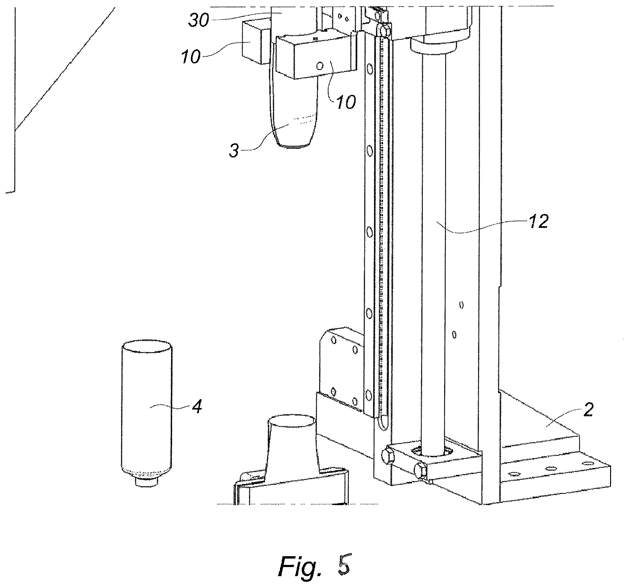

Par des moyens pneumatiques, la poche 3 est aspirée contre le mandrin 30, ce qui assure sa retenue sur le mandrin 30 et permet de relâcher les deux pinces 10 ce que l'on peut voir à la figure 5.

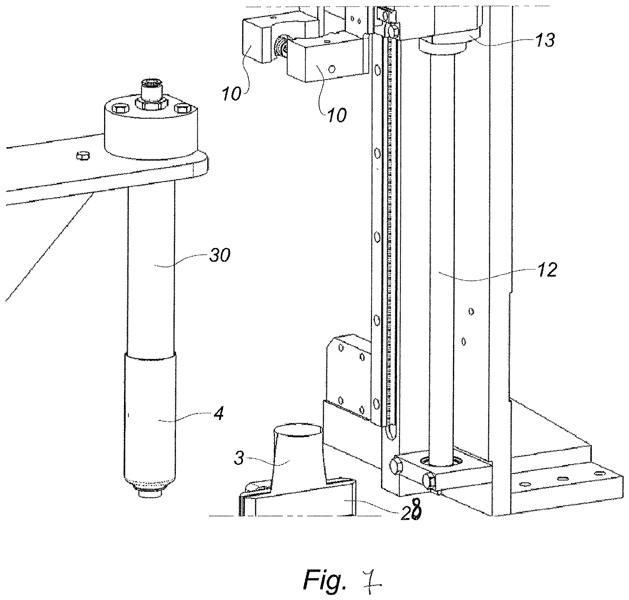

Le mandrin 30 sur lequel la poche 3 est retenue est déplacé pour être positionné à la verticale de l'enveloppe 4 puis pour amorcer une descente en vue de l'introduction de la poche 3 dans l'enveloppe 4, comme cela est illustré à la figure 7.

La poche 3 est déposée dans l'enveloppe 4 par aspiration ; une dépression est créée pour ôter la poche 3 du mandrin 30.

L'enveloppe 4 repose sur une embase 32 présentant une empreinte tronconique permettant de maintenir avec stabilité l'enveloppe 4 à l'embase 32. En partie haute, une bague 33 assure le maintien de l'enveloppe 4.

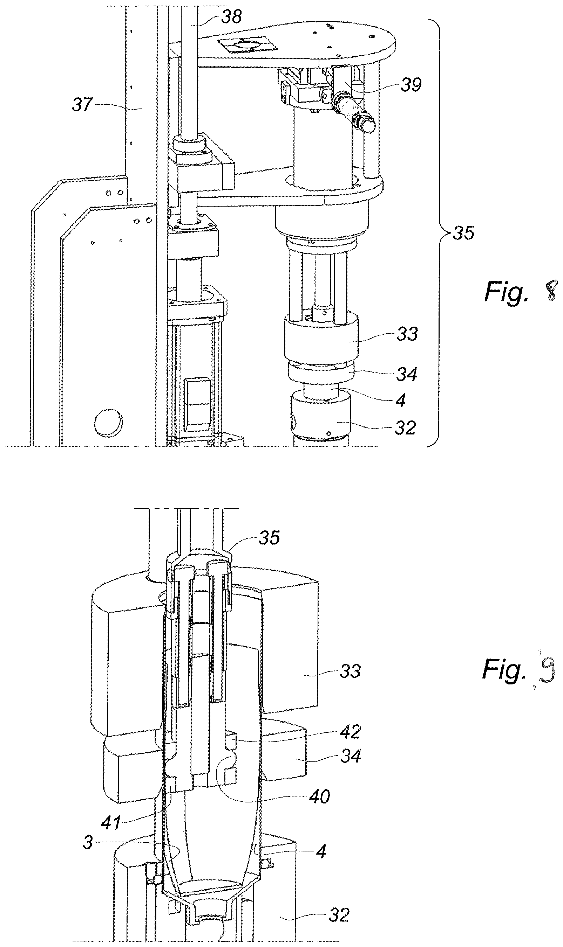

La figure 8 montre l'enveloppe 4 positionnée sur l'embase 32 tandis qu'une tête de soudure désignée globalement par la référence 35 est engagée à l'intérieur de l'enveloppe 4 pour fixer la poche 3 dans cette dernière.

La tête de soudage 35 comprend une cinématique qui permet de déplacer cette dernière dans une direction permettant son introduction et sa sortie de l'enveloppe 4.

La cinématique de déplacement de la tête de soudage 35 possède un bâti 37 doté d'un axe 38 sur lequel se déplace la tête de soudage.

De plus, la cinématique de déplacement de la tête de soudage 35 intègre un mécanisme 39 de déplacement radial de la tête de soudage. Ce mécanisme peut être, par exemple, à crémaillère et pignon.

Comme on peut le voir sur la vue en coupe de la figure 9, la soudure de la poche 3 sur la surface interne de l'enveloppe 4 se fait par un outil de chauffe éventuellement pourvu d'un revêtement téflon. La tête de soudage 35 est pourvue d'une nervure de chauffe 40 par laquelle le chauffage s'effectue. On note la présence de deux bagues d'isolation 41 et 42 de part et d'autre de la nervure de chauffe 40.

Une bague 34 de contre appui, que l'on peut voir à la figure 8 et à la figure 9 (en coupe), est placée à l'extérieur de l'enveloppe 4.

En pratique, le soudage de la poche 3 à l'intérieur de l'enveloppe 4 s'effectue de la manière suivante.

La tête de soudage 35 est introduite dans l'enveloppe 4 sensiblement selon l'axe de symétrie de celle-ci.

Arrivée en fin de course, la tête de soudage 35 suit un déplacement radial et vient en contact tangentiel avec la poche 3 qui est elle-même plaquée contre l'enveloppe 4.

La nervure de chauffe 40 produit une fusion de la poche 3 avec l'enveloppe 4. L'enveloppe 4 est entrainée en rotation sur un tour complet de sorte qu'un cordon de soudure se forme sur 360° de façon continue. Les bagues d'isolation 41 et 42 permettent de localiser l'effet de chauffe et ainsi préviennent la déformation de l'enveloppe 4. Ainsi la face extérieure de l'enveloppe est dépourvue de marque liée au soudage.

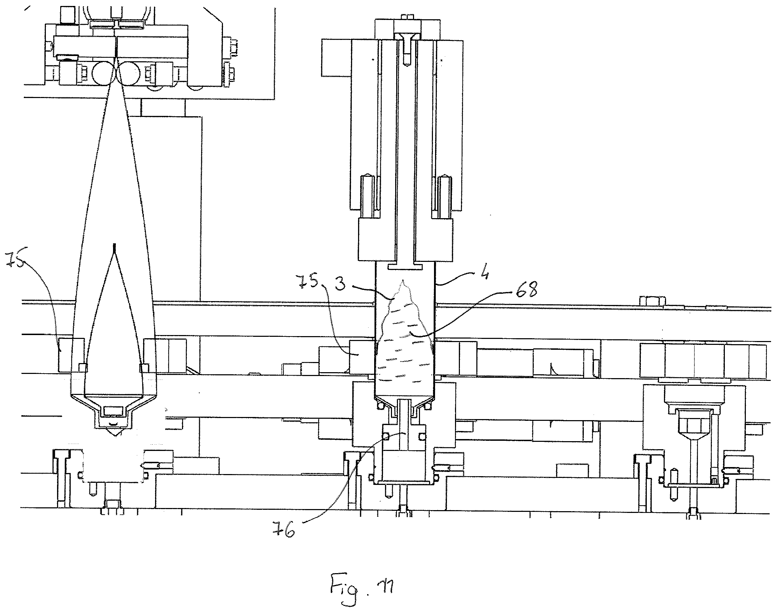

La figure 11 montre l'enveloppe 4 dans laquelle la poche 3 est soudée. Comme on peut le voir sur la figure 11, l'enveloppe 4 est ouverte à son extrémité opposée à son col.

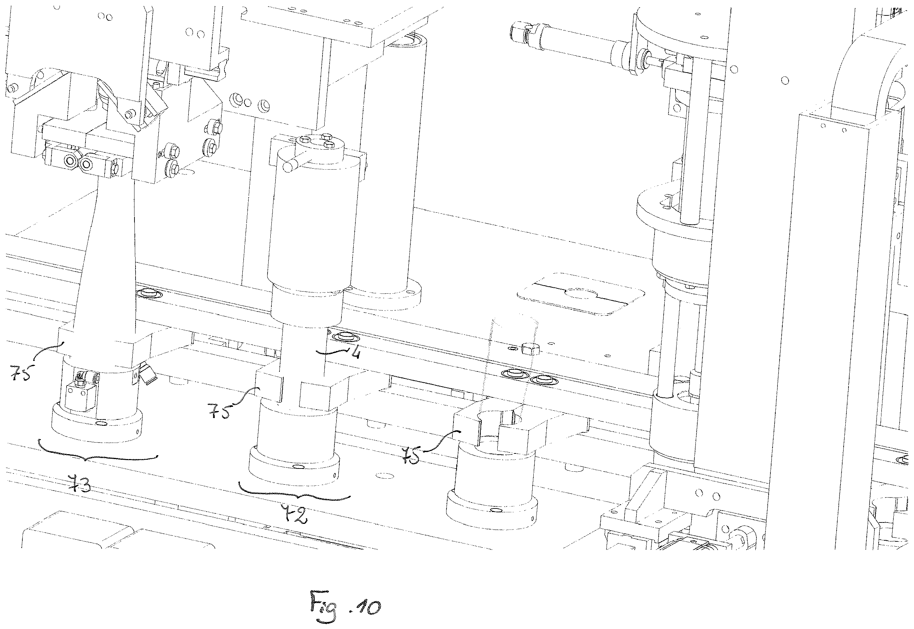

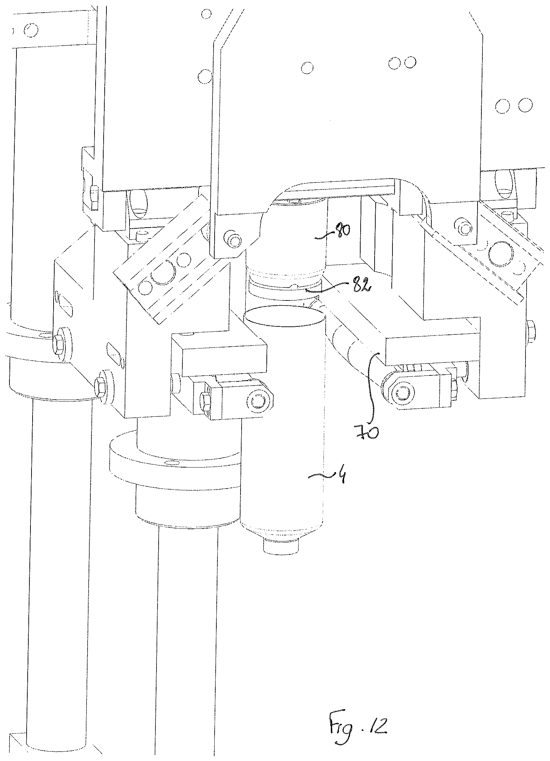

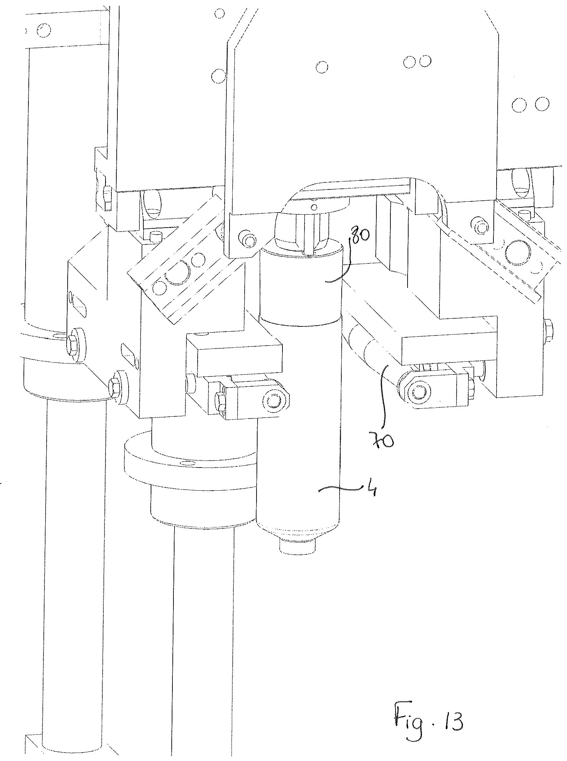

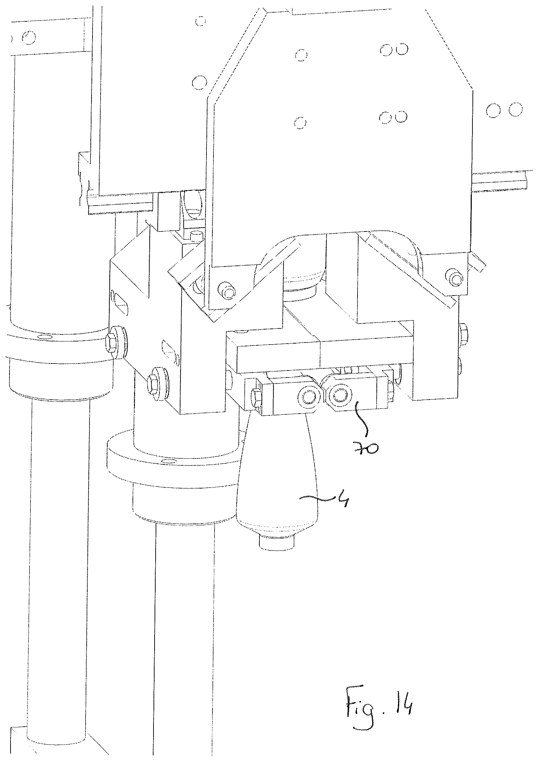

Dans l'exemple de réalisation illustré sur les figures 10 à 14, le dispositif comprend un poste de remplissage 72 d'un produit 68 liquide ou semi liquide ou pâteux tel que, par exemple, une pate dentifrice ou une crème cosmétique adjacent à un poste d'obturation 73 de l'enveloppe 4.

On peut voir à la figure 10 que le dispositif comprend des pinces 75 permettre de déplacer l'enveloppe 4 d'un poste à l'autre.

Le remplissage de la poche 3 est effectué en introduisant une buse 76 dans l'embouchure 8 de l'enveloppe 4. Si la nature du produit l'exige, le remplissage de la poche 3 peut être effectué sous vide. Cela permet notamment le remplissage de petit volume compris dans une poche 3 sur dimensionné sans contact avec un air ambiant résiduel qui produit une oxydation.

L'enveloppe 4 et la poche 3 délimite un espace parfaitement clos qui est prêt à recevoir un produit 68 à conditionner.

Il est à noter que l'enveloppe 4 étant ouverte, la poche 3 peut se déployer sans contrainte au cours de son remplissage.

Un opercule peut être ensuite déposé sur l'embouchure de l'enveloppe 4.

L'obturation de l'enveloppe 4 se fait en effectuant, tout d'abord, un apport de chaleur. Pour cela, un mandrin 80 chauffant est engagé dans l'extrémité ouverte de l'enveloppe 4. L'apport de chaleur se fait donc sur la face intérieure de l'enveloppe. Le mandrin 80 chauffant est doté sur sa face d'extrémité d'un système de refroidissement 82 qui forme une barrière thermique et protège le produit 68 du dégagement de chaleur. Le système de refroidissement peut fonctionner, par exemple, par jet d'air frais.

Ensuite, l'obturation de l'enveloppe est réalisée par deux mors 70 qui écrasent l'extrémité ouvert de l'enveloppe 4. Il est précisé que les mors 70 sont à température ambiante. Ainsi, l'obturation de l'enveloppe 4 se fait sans apport de température sur l'extérieur de l'enveloppe 4 ce qui confère à l'enveloppe à un aspect particulièrement lisse.

L'invention fournit ainsi un dispositif permettant de positionner et fixer une poche en film de matière plastique dans une enveloppe élastiquement déformable.

## Revendications

1. Dispositif de production d'un emballage comprenant une enveloppe (4) élastiquement déformable comprenant un corps (5) ayant une extrémité ouverte (6) et une extrémité dotée d'un col (7) et une poche (3) souple tubulaire comprenant une extrémité ouverte et une extrémité fermée par une ligne de soudage transversale, le dispositif comprenant des moyens de formation de la poche (3) à partir d'un film de matière plastique, des moyens de préhension de la poche (3), des moyens d'engagement de la poche (3) dans l'enveloppe (4) et des moyens de soudage de la poche (3) dans l'enveloppe (4) configurés pour effectuer une soudure thermique continue et rotative à l'intérieur de l'enveloppe (4).

2. Dispositif selon la revendication 1, **caractérisé en ce que** le dispositif comprend un mandrin (30) mobile sur lequel la poche (3) est susceptible de venir s'engager et des pinces (10) mobiles entre une position rapprochée dans laquelle les pinces (10) retiennent la poche (3) sur le mandrin (30) et une position écartée dans laquelle les pinces (10) libèrent la poche (3) du mandrin (30).

3. Dispositif selon la revendication 1, **caractérisé en ce que** chacune des pinces (10) est pourvue d'au moins un système de prise par aspiration.

4. Dispositif selon la revendication 2 ou la revendication 3, **caractérisé en ce que** le mandrin (30) comprend des moyens de rétraction de la poche (3) sur le mandrin (30).

5. Dispositif selon l'une des revendications 1 à 4, **caractérisé en ce que** le dispositif présente des mâchoires permettant un pincage et découpe de la poche (3).

6. Dispositif selon l'une des revendications 1 à 5, **caractérisé en ce que** le dispositif comprend une embase (32) dotée d'une empreinte complémentaire du col de l'enveloppe (4) et une bague de maintien de l'extrémité ouverte de l'enveloppe (4).

7. Dispositif selon l'une des revendications 1 à 6, **caractérisé en ce que** le dispositif comprend une tête de soudage (35) conçue pour s'engager dans l'enveloppe (4) lorsque celle-ci est placée sur l'embase (32).

8. Dispositif selon la revendication 7, **caractérisé en ce que** la tête de soudage (35) comprend une nervure de chauffe (40) conçue pour venir tangenter la poche (3) placée dans l'enveloppe (4) de façon continue et rotative.

9. Dispositif selon la revendication 6 à 8, **caractérisé en ce que** l'embase (32) possède des moyens de mise en rotation permettant à l'enveloppe d'effectuer un tour sur elle-même d'au moins 360°.

10. Dispositif selon l'une des revendications 1 à 9, **caractérisé en ce que** les moyens de formation de la poche (3) comprennent un entrefer (51) délimité par un noyau (52) et une bague (53) dans lequel un film est recourbé sur lui-même et une roulette de soudage (56) effectuant une soudure longitudinale.

11. Dispositif selon la revendication 10, **caractérisé en ce que** le dispositif comprend des éléments de soudage réalisant des soudures transversales (58) selon un pas régulier formant le fond d'une poche (3).

12. Dispositif selon l'une des revendications 1 à 11, **caractérisé en ce que** le dispositif comprend un mandrin chauffant destiné à être engagé dans l'extrémité ouverte de l'enveloppe (4) et deux mors destiné à venir écraser l'extrémité de l'enveloppe (4).

13. Dispositif selon la revendication 12, **caractérisé en ce que** le mandrin présente un système de refroidissement à son extrémité formant une barrière thermique avec l'intérieur de l'enveloppe.

## Patentansprüche

1. Vorrichtung zur Herstellung einer Verpackung, eine elastisch verformbare Hülle (4) umfassend, welche einen Körper (5) umfasst, welcher ein offenes Ende (6) und ein mit einem Kragen (7) ausgestattetes Ende aufweist, und einen röhrenförmigen elastischen Beutel (3), welcher ein offenes Ende und ein durch eine querlaufende Schweißnaht geschlossenes Ende umfasst, wobei die Vorrichtung Mittel zum Bilden des Beutels (3) aus einer Kunststoffmaterialfolie, Mittel zum Greifen des Beutels (3), Mittel zum Einsetzen des Beutels (3) in die Hülle (4) und Mittel zum Schweißen des Beutels (3) in der Hülle (4) umfasst, konfiguriert, um eine kontinuierliche und drehende thermische Schweißung im Inneren der Hülle (4) durchzuführen.

2. Vorrichtung nach Anspruch 1, **dadurch gekennzeichnet, dass** die Vorrichtung einen beweglichen Dorn (30) umfasst, auf welchem der Beutel (3) eingesetzt werden kann, und Klemmen (10), welche zwischen einer angenäherten Position, in welcher die Klemmen (10) den Beutel (3) auf dem Dorn (30) halten, und einer gespreizten Position beweglich sind, in welcher die Klemmen (10) den Beutel (3) von dem Dorn (30) freigeben.

3. Vorrichtung nach Anspruch 1, **dadurch gekennzeichnet, dass** jede der Klemmen (10) mit mindestens einem Aufnahmesystem durch Ansaugen versehen ist.

4. Vorrichtung nach Anspruch 2 oder Anspruch 3, **dadurch gekennzeichnet, dass** der Dorn (30) Mittel zum Zusammenziehen des Beutels (3) auf dem Dorn (30) umfasst.

5. Vorrichtung nach einem der Ansprüche 1 bis 4, **dadurch gekennzeichnet, dass** die Vorrichtung Backen aufweist, welche ein Klemmen und Zuschneiden des Beutels (3) ermöglichen.

6. Vorrichtung nach einem der Ansprüche 1 bis 5, **dadurch gekennzeichnet, dass** die Vorrichtung einen Sockel (32) umfasst, welcher mit einem ergänzenden Abdruck des Kragens der Hülle (4) und einem Ring zum Halten des offenen Endes der Hülle (4) ausgestattet ist.

7. Vorrichtung nach einem der Ansprüche 1 bis 6, **dadurch gekennzeichnet, dass** die Vorrichtung einen Schweißkopf (35) umfasst, welcher gestaltet ist, um in die Hülle (4) eingesetzt zu werden, wenn diese auf dem Sockel (32) platziert ist.

8. Vorrichtung nach Anspruch 7, **dadurch gekennzeichnet, dass** der Schweißkopf (35) eine Heizrippe (40) umfasst, welche gestaltet ist, um den Beutel (3), welcher in der Hülle (4) platziert ist, kontinuierlich und drehend zu tangieren.

9. Vorrichtung nach Anspruch 6 bis 8, **dadurch gekennzeichnet, dass** der Sockel (32) Mittel zum in Drehung versetzen besitzt, welche es der Hülle ermöglichen, eine Umdrehung um die eigene Achse um mindestens 360° durchzuführen.

10. Vorrichtung nach einem der Ansprüche 1 bis 9, **dadurch gekennzeichnet, dass** die Mittel zum Bilden des Beutels (3) einen Luftspalt (51) umfassen, der durch einen Kern (52) und einen Ring (53) begrenzt wird, in dem eine Folie zurückgebogen ist, und eine Schweißrolle (56), welche eine Längsschweißung durchführt.

11. Vorrichtung nach Anspruch 10, **dadurch gekennzeichnet, dass** die Vorrichtung Schweißelemente umfasst, welche querlaufende Schweißungen (58) in einem regelmäßigen Schritt realisieren, die den Boden eines Beutels (3) bilden.

12. Vorrichtung nach einem der Ansprüche 1 bis 11, **dadurch gekennzeichnet, dass** die Vorrichtung einen Heizdorn umfasst, dazu bestimmt, in das offene Ende der Hülle (4) eingesetzt zu werden, und zwei Klemmbacken, dazu bestimmt, das Ende der Hülle (4) zu quetschen.

13. Vorrichtung nach Anspruch 12, **dadurch gekennzeichnet, dass** der Dorn ein Kühlsystem an seinem Ende aufweist, welches mit dem Inneren der Hülle eine thermische Barriere bildet.

## Claims

1. A device for producing a package comprising an elastically deformable envelope (4) comprising a body (5) having an open end (6) and an end provided with a neck (7) and a flexible tubular pouch (3) comprising an open end and an end closed by a transverse welding line, the device comprising means for forming the pouch (3) from a film made of plastic material, means for gripping the pouch (3), means for engaging the pouch (3) in the envelope (4) and means for welding the pouch (3) in the envelope (4) configured to perform a continuous and rotatable thermal welding inside the envelope (4).

2. The device according to claim 1, **characterized in that** the device comprises a movable mandrel (30) on which the pouch (3) is likely to be engaged and clamps (10) movable between a drawn-together position in which the clamps (10) hold the pouch (3) on the mandrel (30) and a spread-apart position in which the clamps (10) release the pouch (3) from the mandrel (30).

3. The device according to claim 1, **characterized in that** each of the clamps (10) is provided with at least one vacuum engagement system.

4. The device according to claim 2 or claim 3, **characterized in that** the mandrel (30) comprises means for retracting the pouch (3) on the mandrel (30).

5. The device according to any of claims 1 to 4, **characterized in that** the device has jaws allowing a clamping and a cutting of the pouch (3).

6. The device according to any of claims 1 to 5, **characterized in that** the device comprises a base (32) provided with a complementary cavity of the neck of the envelope (4) and a ring for maintaining of the open end of the envelope (4).

7. The device according to any of claims 1 to 6, **characterized in that** the device comprises a welding head (35) adapted to engage in the envelope (4) when the latter is placed on the base (32).

8. The device according to claim 7, **characterized in that** the welding head (35) comprises a heating rib (40) adapted to be tangent to the pouch (3) continuously and rotatably placed in the envelope (4).

9. The device according to claim 6 to 8, **characterized in that** the base (32) has rotating means allowing the envelope to perform an at least 360° revolution on itself.

10. The device according to any of claims 1 to 9, **characterized in that** the means for forming the pouch (3) comprise an air gap (51) delimited by a core (52) and a ring (53) in which a film is curved on itself and a welding wheel (56) performing a longitudinal weld.

11. The device according to claim 10, **characterized in that** the device comprises welding elements performing transverse welds (58) according to a regular pitch forming the bottom of a pouch (3).

12. The device according to any of claims 1 to 11, **characterized in that** the device comprises a heating mandrel intended to be engaged in the open end of the envelope (4) and two grips intended to crush the end of the envelope (4).

13. The device according to claim 12, **characterized in that** the mandrel has a cooling system at its end forming a thermal barrier with the inside of the envelope.
